# EUROPÄISCHE PATENTSCHRIFT

(11) **EP 1 952 040 B1**
(45) Veröffentlichungstag und Bekanntmachung des Hinweises auf die Patenterteilung: **15.09.2010**
(21) Anmeldenummer: 06818672.5
(22) Anmeldetag: 20.11.2006
(51) Int. Cl.: F16D 27/00, F16D 65/14, F16D 63/00

(54) **VORRICHTUNG ZUR HERSTELLUNG EINER REIB- UND/ODER FORMSCHLUSSVERBINDUNG ZWISCHEN ZWEI RELATIV ZUEINANDER ROTIERBAR ODER LINEARBEWEGLICH ANGEORDNETEN KOMPONENTEN**
APPARATUS FOR PRODUCING A FRICTIONAL AND/OR FORM-FITTING CONNECTION BETWEEN TWO COMPONENTS WHICH ARE ARRANGED SUCH THAT THEY CAN BE MOVED LINEARLY OR ROTATED RELATIVE TO ONE ANOTHER
DISPOSITIF DE FABRICATION D'UN RACCORD À FRICTION ET/OU BOUT À BOUT ENTRE DEUX COMPOSANTS MOBILES DE FAÇON LINÉAIRE OU POUVANT TOURNER L'UN PAR RAPPORT À L'AUTRE

(30) Priorität: 21.11.2005 DE 102005055759
(43) Veröffentlichungstag der Anmeldung: 06.08.2008
(73) Patentinhaber: Fraunhofer-Gesellschaft zur Förderung der angewandten Forschung e.V., 80686 München (DE)
(72) Erfinder: HEROLD, Sven, 64823 Gross-Umstadt (DE); SEIPEL, Björn, 61197 Florstadt (DE); BÖS, Joachim, 64295 Darmstadt (DE); MELZ, Tobias, 64285 Darmstadt (DE)
(74) Vertreter: Rösler, Uwe
(86) Internationale Anmeldenummer: PCT/EP2006/011107
(87) Internationale Veröffentlichungsnummer: WO 2007/057218

(56) Entgegenhaltungen:
- WO-A2-2005/005828
- DE-A1- 10 213 915
- GB-A- 2 010 396
- JP-A- 58 211 027
- US-A- 5 826 683
- US-B1- 6 902 048

## Beschreibung

### Technisches Gebiet

Die Erfindung bezieht sich auf eine Vorrichtung zur Herstellung einer Reib- und/oder Formschlussverbindung zwischen zwei relativ zueinander rotierbar oder linearbeweglich angeordneten Komponenten zu Zwecken einer Übertragung von linear und/oder rotatorisch zwischen beiden Komponenten wirkenden Kräften und/oder Kraftmomenten, von denen die erste Komponente die zweite Komponente zumindest abschnittsweise mit wenigstens einer der zweiten Komponente zugewandten Innenwand umgibt und die zweite Komponente wenigstens ein Wirkflächenelement vorsieht, das kraftbeaufschlagt aus einer ersten Position, in der das Wirkflächenelement von der Innenwand beabstandet ist, in eine zweite Position überführbar ist, in der das Wirkflächenelement mit der Innenwand die Reib- und/oder Formschlussverbindung eingeht. Eine derartige Vorrichtung findet vorzugsweise Verwendung als Bremse oder Kupplung.

In Ergänzung wird auch eine zur vorstehenden Vorrichtung vergleichbare alternative Vorrichtung beschrieben, bei der zwei unabhängig um eine gemeinsame Drehachse rotierbar gelagerte Komponenten vorgesehen sind, die zu Zwecken der Übertragung von rotatorisch zwischen beiden Komponenten wirkenden Kräften und/oder Kraftmomenten in Wirkverbindung gebracht werden, wobei die erste Komponente wenigstens eine Wirkfläche vorsieht, die gegenüber der Drehachse geneigt ist oder die Drehachse orthogonal schneidet und die zweite Komponente wenigstens eine Wirkfläche derart vorsieht, dass durch axiale Auslenkung wenigstens einer der beiden Wirkflächen ein Flächenkontakt zwischen den beiden Wirkflächen herstellbar ist, der zu einer Reib- und/oder Formschlussverbindung zwischen beiden Komponenten führt. Eine derartige Vorrichtung findet Anwendung als Kupplungselement, durch das beide Komponenten aus einem Zustand unabhängiger Rotation in einen Synchronlauf überführt werden können.

### Stand der Technik

Vorrichtungen der vorstehend genannten Gattung dienen vornehmlich der kontrollierten Kraftübertragung zwischen zwei, zumeist längs einer gemeinsamen Drehachse relativ zueinander rotierbar gelagerten Komponenten, von denen eine Komponente mit einem Antrieb und die andere mit einem Abtrieb verbunden sind. Die im Wege einer Reib- und/oder Formschlussverbindung miteinander in Wirkverbindung tretenden Komponenten vermögen je nach technischem Einsatzzweck entweder eine Bremswirkung von einer als Abtrieb wirkenden Komponenten auf die andere als Antrieb dienende Komponente zu entfalten, oder im Falle der Ausbildung als Kupplung gilt es, die um eine gemeinsame Drehachse jeweils unabhängig voneinander rotierenden Komponenten in einen entsprechenden Synchronlauf überzuführen.

Als klassisches Beispiel für die Ausbildung einer Bremse sei auf die konventionelle Trommelbremse verwiesen, bei der zwei um jeweils eine Schwenkachse drehbeweglich an einem festen Gegenlager sichelförmig ausgebildete Bremsbacken vorgesehen sind, deren radial außen liegende Sichelkontur jeweils durch eine Kreisform einbeschreibbar sind und die durch aktorische Auslenkung um die jeweils vorgesehenen Schwenkachse sich gegenseitig abstützend, radial nach außen geschwenkt werden und an die Innenseite eines trommelförmig ausgebildeten Gehäuses pressen, das beispielsweise drehfest mit einem Rad verbunden ist, das es abzubremsen gilt. Als Aktor dient zumeist ein Hydraulikzylinder, durch dessen Betätigung sichelförmig ausgebildeten Bremsbacken radial nach außen gespreizt werden. Nach Beendigung der Betätigung der Bremszylinder werden die Bremsbacken mittels einer Rückstellfeder radial nach innen, d.h. in einen vom Trommelgehäuse beabstandeten Zustand, zurückgeführt.

Zur Auslösung des Bremsvorganges bedarf es ist in aller Regel der Betätigung eines Geberzylinders, das durch entsprechende hydraulische Kraftübersetzung die in der Trommelbremse vorgesehenen Bremsbacken gegen die jeweilige Innenseite des Trommelgehäuses kraftbeaufschlagt zu spreizen vermag.

In vielen technischen Anwendungsbereichen ist es wünschenswert, bestimmte mechanische Kuppel- oder Bremsvorgänge in Abhängigkeit beispielsweise der Temperatur und/oder von anderweitigen, externen Energiezuständen kontrolliert durchzuführen. Zur Aktivierung derartiger Brems- oder Kuppelvorgänge ist zumeist die Zufuhr äußerer Energie, beispielsweise in Form mechanischer Energie, wie vorstehend beschrieben, beispielsweise durch Betätigung eines Schalt- oder Bremshebels, oder durch Zufuhr elektrischer Energie, beispielsweise durch elektrische Erregung einer Spule, erforderlich, was letztlich zu einer erhöhten Komplexität der Brems- oder Kuppelvorrichtung führt.

Aus der US 4,550,695 ist eine Lüfteranordnung entnehmbar, deren motorisch angetriebenes Lüfterrad durch eine Federbremse in einer abgebremsten Stellung verharrt. Die Federbremse ist einseitig fest mit einem stationären Gehäuse verbunden und drückt andererseits über ein federkraftbeaufschlagtes Bremselement an eine drehfest mit dem Lüfterrad verbundene Bremsscheibe. Solange eine bestimmte Grenztemperatur nicht überschritten wird, wird das Lüfterrad durch innigen Kontakt zwischen Bremselement und Bremsscheibe abgebremst. Bei Überschreitung einer bestimmten Grenztemperatur sinkt die Federkraft, wodurch das Bremselement in eine gegenüber der Bremsscheibe beabstandete Position überführt und das Lüfterrad zur freien Rotation freigegeben wird. Das mit dem Bremselement in Wirkverbindung stehende Federelement besteht aus einer Formgedächtnislegierung, die bei niedrigen Temperaturen einen elongierten Zustand und bei Temperaturen oberhalb einer bestimmten Grenztemperatur einen verkürzten Zustand einnimmt. Die in der vorstehend beschriebenen Druckschrift beschriebene Bremsvorrichtung wird somit autonom durch die Umgebungstemperatur aktiviert.

Aus der JP 62147130 A ist eine Überlastkupplung zu entnehmen, die in Art einer Trommelbremse aufgebaut ist und innerhalb eines Trommelgehäuses innenliegende, Bremsbackenkörper vorsieht, die einer durch Rotation verursachten Zentrifugalkraft unterliegen und hierdurch radial gegen die Innenwand des Trommelgehäuses getrieben werden. Die Bremsbacken stehen überdies in Wirkverbindung mit einer aus Formgedächtnislegierung bestehenden Feder, die im Falle einer durch erhöhte Bremsreibung verursachte thermische Überhitzung einer Verkürzung unteriegt, wodurch die Bremsbackenkörper durch die Feder radial nach innen gezogen werden und die Bremswirkung nachlässt, wodurch letztlich eine thermische Überhitzung der als Kupplung wirkenden Vorrichtung vermieden wird.

In der JP 61099724 A ist eine zwischen einem An- und Abtrieb vorgesehenen Kupplung beschrieben, bei der eine Spiralfeder durch eine aus Formgedächtnismaterial bestehende Feder gedehnt sowie entspannt wird, wodurch eine An- sowie Abtriebswelle ein- bzw. ausgekuppelt wird. Um den Kupplungsvorgang vorzunehmen, wird die aus Formgedächtnismaterial bestehende Feder einem elektrischen Steuerstrom ausgesetzt.

Der japanischen Druckschrift JP 58211027 A ist ebenfalls ein die Bremskraft zwischen zwei rotierenden Körpern verstärkender Mechanismus zu entnehmen, der gleichsam dem eingangs zitierten Aufbau einer Trommelbremse zwei sichelförmig, jeweils an die Innenkontur des Trommelgehäuses angepasste Bremsbacken vorsieht, die um eine gemeinsame Drehachse radial nach außen gegen die Trommelgehäusewand schwenkbar sind. Die Auslenkung der Bremsbacken um die Drehachse erfolgt mit Hilfe eines extern betätigbaren Hydraulikzylinders, durch den die Bremsbacken in innigen Reibkontakt mit der Trommelgehäuse-Innenwand bringbar sind. Durch die relativ zu den Bremsbacken rotierende Trommel-Innenwand entsteht Reibungswärme, die ein mit den Bremsbacken gleichfalls verbundenes, aus Formgedächtnismetall bestehendes Wirkelement zu spreizen vermag, wodurch die Bremskraft zwischen den Bremsbacken und der Trommelgehäuse-Innenwand verstärkt wird.

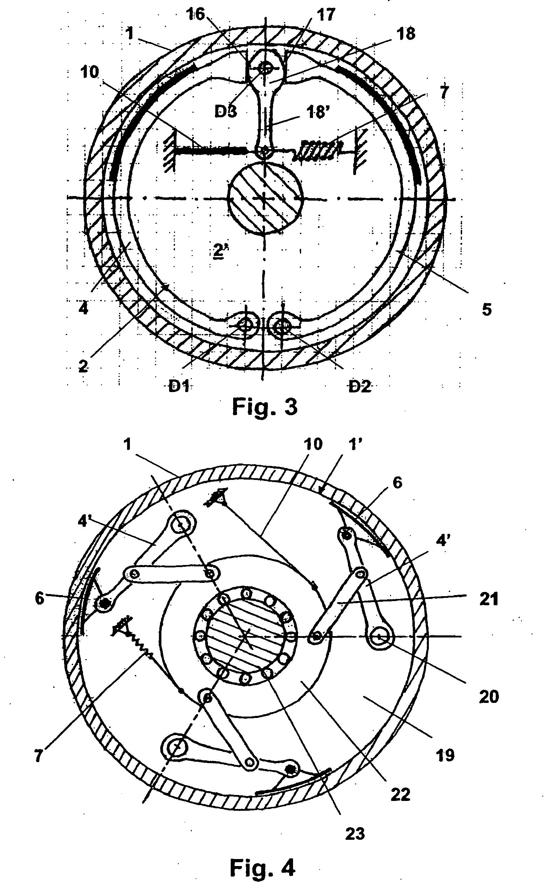

Die DE 10 2004 027 375 A1 beschreibt eine elektrische Bremsvorrichtung, die in einem Ausführungsbeispiel gemäß Fig. 4 zwei rotatorisch relativ zueinander angeordnete Komponenten aufweist, die gegenseitig mit Hilfe von Wirkelementen miteinander in Eingriff gebracht werden können. Hierbei ist wenigstens ein mechanisches Spannelement vorgesehen, das auf die Wirkflächenelemente eine Rückstellkraft entfaltet, wodurch die Wirkflächenelemente in einer ersten Position gehalten werden, in denen beide Komponenten zueinander rotierbar gelagert sind. Ein aus einem aktiven Polymer bestehender Aktor vermag nun bei entsprechender Versorgung mit elektrischem Strom die Wirkflächenelemente in die zweite Position überzuführen, in der beide rotierbar angeordneten Komponenten in gegenseitigen Bremskontakt geraten.

Ferner geht aus der GB 1 010 396 A eine Lüfterkupplung hervor, die eine Temperatur geregelte Bremswirkung entfaltet, indem eine aus Formgedächtnismetall bestehende Feder vorgesehen ist, die bei Überschreiten einer Übergangstemperatur eine Ausdehnung und damit verbunden eine Bremswirkung entgegen einer Federkraft auf eine Antriebswelle entfaltet.

### Darstellung der Erfindung

Der Erfindung liegt die Aufgabe zugrunde, eine Vorrichtung zur Herstellung einer Reib- und/oder Formschlussverbindung zwischen zwei relativ zueinander rotierbar oder linearbeweglich angeordneten Komponenten der eingangs beschriebenen Gattung derart weiterzubilden, dass die Übertragung von rotatorisch oder linear beschleunigenden oder abbremsenden Kräften bzw. Kraftmomenten zwischen einer drehbar bzw. linear beweglich gelagerten Komponente relativ zu einer zweiten Komponente mit möglichst einfachen konstruktiven Maßnahmen erfolgen kann, wobei der Schalt- bzw. Kuppelvorgang, bei dem beide Komponenten miteinander in Eingriff bzw. in Wirkverbindung gebracht werden, selbsttätig, d.h. ohne Steuerung einer externen Energiezufuhr erfolgt. Die Aktivierung des Schalt- bzw. Kuppelvorganges soll vielmehr selbsttätig in Abhängigkeit eines ungesteuert bzw. ungeregelt sich einstellenden Energiezustandes, wie beispielsweise die Umgebungstemperatur, initiiert werden. Überdies soll es auch möglich sein, die Aktivierung in Abhängigkeit neben der thermischen Energie auch von weiteren Energieformen, wie beispielsweise magnetische oder elektrodynamische Energie, vorzunehmen.

Die Lösung der der Erfindung zugrunde liegenden Aufgabe ist in den Ansprüchen 1, 2, 3 und 4 beschrieben. Den Erfindungsgedanken vorteilhaft weiterbildende Merkmale sind Gegenstand der Unteransprüche, aber insbesondere der Beschreibung unter Bezugnahme auf die einzelnen Ausführungsbeispiele entnehmbar.

Lösungsgemäß zeichnet sich eine Vorrichtung zur Herstellung einer Reib- und/oder Formschlussverbindung zwischen zwei relativ zueinander rotierbar oder linear beweglich angeordneten Komponenten zu Zwecken einer Übertragung von linear und/oder rotatorisch zwischen beiden Komponenten wirkenden Kräften und/oder Kraftmomenten, nach den Merkmalen des Oberbegriffes des Anspruches 1 dadurch aus, dass die Kinematik als Kniehebel ausgebildet ist, der jeweils mit den anderen Wirkflächenelementenden verbunden ist und über den ein draht- oder bandförmiger Wandlerwerkstoff geführt ist, der mit den beiden anderen Wirkflächenelementenden verbunden ist und der bei Energieeintrag, vorzugsweise bei kontaktlosem Energieeintrag, eine Formänderung erfährt, wodurch der Kniehebel in eine gespreizte Stellung und die Wirkflächenelemente in die zweite Position überführbar sind.

Eine weitere Lösungsalternative sieht vor, dass im Bereich der jeweils anderen Wirkflächenelementenden jeweils ein stegartiger Fortsatz angebracht ist, der sich jeweils in Richtung des andern Wirkflächenelementes erstreckt, wobei sich beide Fortsätze vorzugsweise gegenseitig überlappen, und dass zwischen beiden Fortsätzen ein draht- oder bandförmiger Wandlerwerkstoff gespannt ist, der bei Energieeintrag, vorzugsweise bei kontaktlosem Energieeintrag, eine Formänderung erfährt, wodurch die Fortsätze und die damit verbundenen Wirkflächenelemente in entgegen gesetzte Raumrichtungen auslenkbar und die Wirkflächenelemente in die zweite Position überführbar sind.

Eine weitere Lösungsalternative sieht vor, dass die jeweils anderen Wirkflächenelementenden durch einen Spalt voneinander beabstandet sind, dass innerhalb des Spaltes eine von der Kreisform abweichende, um eine Drehachse drehbar gelagerte Auslenkkontur vorgesehen ist, an der beide Wirkflächenelementenden gegenüberliegend anliegen, dass an der Auslenkkontur ein Hebelarm angebracht ist, an dem einseitig ein mit der zweiten Komponente als Gegenlager verbundener draht- oder bandförmiger Wandlerwerkstoff angelenkt ist und an dem andererseits das mit der zweiten Komponente als Gegenlager verbundene Spannelement angelenkt ist, und dass bei Energieeintrag, vorzugsweise bei kontaktlosem Energieeintrag, der draht- oder bandförmige Wandlerwerkstoff eine Formänderung erfährt, wodurch die Auslenkkontur gedreht und der Abstand zwischen beiden Wirkflächenelementenden vergrößert wird, so dass die Wirkflächenelemente in die zweite Position überführbar sind.

Schließlich zeichnet sich lösungsgemäß eine Vorrichtung zur Herstellung einer Reib- und/oder Formschlussverbindung zwischen zwei relativ zueinander rotierbar oder linearbeweglich angeordneten Komponenten zu Zwecken einer Übertragung von linear und/oder rotatorisch zwischen beiden Komponenten wirkenden Kräften und/oder Kraftmomenten, dadurch aus, dass die erste Komponente eine schwalbenwanzartige Ausnehmung mit jeweils zwei schräg zueinander orientierten, sich gegenüberliegenden Seitenflanken aufweist, die der Innenwand der ersten Komponente entsprechen, und dass die zweite Komponente zwei translatorisch oder rotatorisch zwangsgeführte Wirkflächenelemente vorsieht, die in die Ausnehmung eingreifen und vermittels der den Wandlerwerkstoff aufweisenden Kinematik derart antreibbar sind, dass bei einer durch Energieeintrag, vorzugsweise durch kontaktlosem Energieeintrag, hervorgerufenen Formänderung des Wandlerwerkstoffes die Wirkflächenelemente jeweils in Eingriff mit einer Seitenflanke gelangen.

So ist die durch einen Wandlerwerkstoff angetriebene Kinematik, durch die ein Kuppel- oder Bremsvorgang zwischen beiden Komponenten initiierbar ist, sowie das wenigstens eine mechanische Spannelement, durch das beide Komponenten kinematisch voneinander entkoppelbar sind, direkt mit der zweiten Komponente verbunden bzw. Teil der zweiten Komponente, so dass, vorzugsweise durch Ausbildung der ersten Komponente in Form eines Trommelgehäuses, das wenigstens eine Spannelement sowie die Kinematik peripher vollständig von dem Trommelgehäuse umgeben werden können, wodurch eine vollständig gekapselte Einheit entsteht, ohne jegliche Verbindung nach außen. Je nach Werkstoffklassenwahl hinsichtlich des die Kinematik antreibenden Wandlerwerkstoffes ist Sorge dafür zu tragen, dass die den Wandlerwerkstoff aktivierende Energieform auch innerhalb des durch die erste Komponente gekapselten Raumes, innerhalb dem der Wandlerwerkstoff sowie das Spannelement enthalten sind, zu wirken vermag. Neben der grundsätzlichen Verwendbarkeit von Piezoelektrika, Elektrostriktiva sowie Magnetostriktiva als mögliche Wandlerwerkstoffe eignet sich insbesondere eine Formgedächtnislegierung (SMA), die bei einer Temperaturänderung eine vorgebbare Formänderung erfährt. Typischerweise erfahren draht- oder bandförmig ausgebildete Formgedächtnislegierungen bei Überschreiten einer von der jeweiligen Legierung abhängigen Schalttemperatur eine Längenverkürzung, die durch entsprechende Ausbildung der Kinematik ursächlich für die Auslenkung der Wirkflächenelemente in die vorstehend beschriebene zweite Position ist. Somit gilt es dafür Sorge zu tragen, dass der Wandlerwerkstoff thermisch an die Umgebungstemperatur gekoppelt ist. Entsprechende Vorkehrungen sind zu treffen, sollte der Wandlerwerkstoff beispielsweise aus einem magnetostriktiven Material bestehen, das durch Variation des den Wandlerwerkstoffes umgebenden Magnetfeldes eine Formänderung erfährt.

Je nachdem, ob beide Komponenten unabhängig voneinander längs einer gemeinsamen Drehachse rotationsfähig gelagert sind oder eine von beiden Komponenten räumlich stationär angeordnet ist, dient die lösungsgemäße Vorrichtung als Kupplung oder Bremse. In beiden Fällen wirken bei entsprechender Auslenkung des wenigstens einen Wirkflächenelementes gegen die Innenwand der ersten Komponente radial zur Drehachse orientierte Kräfte, durch die der Kupplungs- bzw. Bremsvorgang zwischen beiden Komponenten hervorgerufen wird.

Die lösungsgemäßen Vorrichtungen lassen sich, wie eingangs erwähnt, grundsätzlich je nach Ausführungsform als Bremse oder Kupplung zwischen zwei rotierenden Wellen einbringen, von denen eine beispielsweise einer Antriebswelle und die andere einer Abtriebswelle entspricht. So eignen sich die lösungsgemäßen Vorrichtungen in besonderer Weise zur kinematischen Ankopplung eines Lüfterpropellers an eine mit einer durch einen Elektromotor angetriebenen Welle. Ziel ist es, einen üblicherweise fest mit einer derartigen Welle verbundenen Lüfterpropeller, der aufgrund der festen Bindung zur Welle stets synchron mit der Wellendrehzahl dreht, derart zu betreiben, dass der Lüfterpropeller nur dann mit der Welle synchron mitdreht, wenn aufgrund der aktuellen Wärmeentwicklung ein durch den Lüfterpropeller hervorrufbarer Kühleffekt gewünscht ist. Ein derartiger Kühleffekt tritt bei üblichen Betriebszuständen lediglich bei extremen Umgebungstemperaturen sowie entsprechend extremer Belastung des Elektromotors ein, so dass der Lüfterpropeller, aus Gründen beispielsweise der Lärmminderung, die vorwiegende Zeit abgeschaltet werden kann. Die lösungsgemäße Kupplungsvorrichtung gestattet es, dass der beispielsweise mit der ersten Komponente fest verbundene Lüfterpropeller von der Antriebswelle, die mit der zweiten Komponente verbunden ist, nur bei Überschreiten einer den Wandlerwerkstoff initial verformenden Umgebungstemperatur mit angetrieben wird. Bleibt die Umgebungstemperatur unterhalb der entsprechenden Grenztemperatur, so werden keinerlei beschleunigende Kräfte von der Antriebswelle zwischen der zweiten und der ersten Komponente übertragen.

Auf Basis der vorstehend allgemein erläuterten Wirkprinzipien zur Ankopplung zweier relativ zueinander drehbar gelagerter Komponenten bzw. zweier linear zueinander beweglicher Komponenten, sind eine Reihe konkreter Ausführungsbeispiele denkbar, anhand derer das allgemeine Erfindungsprinzip näher erläutert werden soll.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
Fig. 1 bis 4 alternative Ausführungsbeispiele für Kupplungs- oder Bremsvorrichtungen, die auf Basis radial zu einer Drehachse wirkenden Kräfte bzw. Kraftmomenten beruhen,
Fig. 5 Brems- bzw. Kupplungsvorrichtung zwischen zwei linear zueinander beweglichen Komponenten, sowie
Fig. 6a, b Prinzipdarstellung zur Erläuterung zweier Anwendungsfälle bezüglich Ab- und Antrieb.

### Wege zur Ausführung der Erfindung, gewerbliche Verwendbarkeit

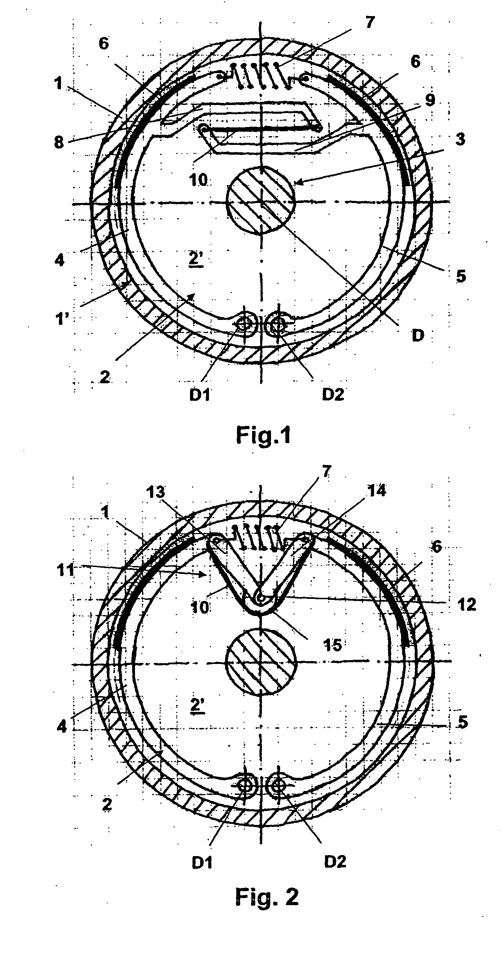

In Fig. 1 ist ein erstes Ausführungsbeispiel für eine lösungsgemäße Vorrichtung gezeigt, mit der es möglich ist, rotatorische Kräfte bzw. Kraftmomente zwischen zwei um eine Drehachse D rotatorisch gelagerte Komponenten 1, 2 zu übertragen. Es sei angenommen, dass die zweite Komponente 2 drehfest an einer Antriebswelle 3 angebracht ist, wohingegen die erste Komponente 1 in Art eines hohlzylinderförmigen Bauelementes bzw. in Art eines Trommelgehäuses ausgebildet ist und mit einem nicht weiter dargestellten Abtrieb verbunden ist. Die zweite, mit der Welle 3 verbundene Komponente 2 weist eine scheibenförmig ausgebildete Trägerplatte 2' auf, auf deren dem Betrachter in Figur 1 zugewandte Oberseite zwei jeweils um einen Drehpunkt D1 und D2 schwenkbar gelagerte sichel- bzw. bogenförmig ausgeformte Wirkflächenelemente 4, 5 angelenkt sind. Die Wirkflächenelemente 4, 5 weisen jeweils eine zur Welle 3 radialseitig abgewandte Oberflächenkontur auf, die weitgehend passgenau an die Innenwand 1' der in Art eines hohlzylinderförmig ausgebildeten Trommelgehäuses ausgebildeten ersten Komponente 1 angepasst sind. Wenigstens in einem ausgewählten Bereich der der Trommelgehäuse-Innenwand 1' zugewandten Oberfläche des jeweiligen Wirkflächenelementes 4, 5 ist ein Reibbelag 6 vorgesehen, durch den erhöhte Reibkräfte zwischen den jeweiligen Wirkflächenelementen 4, 5 und der Innenwand 1' der als Trommelgehäuse ausgebildeten ersten Komponente 1 erzeugbar sind.

Die den Drehpunkten D1 und D2 gegenüberliegenden Enden der Wirkflächenelemente 4, 5 sind mit einem mechanischen Spannelement 7, das im Falle des Ausführungsbeispiels gemäß Fig. 1 als konventionelle Zugfeder ausgebildet ist, miteinander verbunden, so dass bei ansonsten kraftfreier Lagerung der Wirkflächenelemente 4, 5 das Spannelement 7 beide Wirkflächenelemente in der aus der in Fig. 1 ersichtlichen Weise zusammenhält, wodurch die der Innenwand der ersten Komponente 1 zugewandten Oberflächen der Wirkflächenelemente 4, 5 und insbesondere die Reibbeläge 6 von der Innenwand der ersten Komponente 1 radial beabstandet sind. Zusätzlich sind an beiden Wirkflächenelementen 4, 5 stegartige Fortsätze 8, 9 in der in Fig. 1 dargestellten Weise angebracht, die sich jeweils in Richtung des gegenüberliegenden Wirkflächenelementes erstrecken, wobei sich beide stegartigen Fortsätze 8, 9 gegenseitig zumindest abschnittsweise überlappen. Zwischen den beiden stegartig ausgebildeten Fortsätzen 8, 9 ist ein draht- oder bandförmig ausgebildeter Wandlerwerkstoff, vorzugsweise in Form eines SMA-Drahtes, d.h. ein aus einem Formgedächtnismaterial bzw. -legierung gefertigter Draht, gespannt, der bei Energieeintrag in Form von Wärmeeinwirkung eine Formänderung dahingehend erfährt, dass er sich bei erhöhter Temperatur in Längserstreckung zusammenzieht. Hierdurch wird eine zu der durch das Spannelement 7 vorherrschenden rückstellenden Kraft entgegengesetzt gerichtete, beide Wirkflächenelemente 4, 5 radial nach außen treibende Kraft generiert, wodurch die Reibbeläge 6 der Wirkflächenelemente 4, 5 in Reibschluss mit der Innenwand 1' der als Trommelgehäuse ausgebildeten ersten Komponente 1 gepresst werden. Je nachdem, ob die mit dem Abtrieb verbundene erste Komponente 1 gleichfalls um die Drehachse D rotieren kann oder feststeht, kann die durch die Antriebswelle 3 vorherrschende Drehbewegung über die zweite Komponente 2 auf die erste Komponente 1 übertragen oder entsprechend abgebremst werden. Fällt hingegen die Temperatur wieder unter einen bestimmten Temperaturwert, so entspannt sich der SMA-Draht und das als konventionelle Zug- bzw. Spiralfeder ausgebildete Spannelement 7 zieht die als Bremsbacken wirkenden Wirkflächenelemente 4, 5 wieder zusammen, so dass der Reibschluss gelöst wird. Die als Spannelement 7 wirkende Zug- bzw. Spiralfeder ist in ihrer Federhärte so auszulegen, dass sie einerseits auch bei höchsten auftretenden Drehzahlen, mit der die zweite Komponente um die Drehachse D rotiert, die Wirkflächenelemente 4, 5 gegen die an ihnen wirkenden Fliehkräfte zusammenhält, andererseits jedoch so steif ausgeführt ist, dass sie vom SMA-Draht 10 bei dessen Erwärmung und von der hierdurch generierten radial auf die Wirkflächenelemente 4, 5 nach außen gerichteten Kraft gedehnt werden kann.

Aus dem in Fig. 1 dargestellten Ausführungsbeispiel kann entnommen werden, dass die für die Herstellung sowie auch für das Lösen eines zwischen der ersten und zweiten Komponente wirkenden Reibschlusses ausschließlich das mit den Wirkflächenelementen 4, 5 in Wirkverbindung stehende Spannelement 7 sowie der draht- oder bandförmig ausgebildete Wandlerwerkstoff 10 erforderlich sind. So bedarf es keiner weiteren, geregelten oder gesteuerten, von extern herrührenden Energiezufuhr, um die zwischen den beiden Komponenten 1, 2 wirksame Reib- und/oder Formschlussverbindung herzustellen bzw. zu lösen. Zur Herstellung bzw. zum Lösen der Reib- und/oder Formschlussverbindung wird lediglich jener Energiezustand genutzt, der es vermag, im Wandlerwerkstoff 10 eine entsprechende Formänderung hervorzurufen. Je nach Wahl des Wandlerwerkstoffes kann die Funktionsweise der lösungsgemäß ausgebildeten Vorrichtung von einem extern vorherrschenden Energiefeld abhängen. Handelt es sich bei dem Wandlerwerkstoff, wie vorstehend beschrieben, um einen temperatursensiblen Werkstoff, wie beispielsweise eine Formgedächtnislegierung, so tritt in aller Regel ab einer bestimmten Grenztemperatur eine Formverkleinerung bzw. -verkürzung des Wandlerwerkstoffes auf, die bei Unterschreiten der Grenztemperatur durch eine äußere Kraft, bspw. Federkraft reversibel in die Ursprungsform zurückgeführt wird. Ebenso sind jedoch auch Wandlerwerkstoffe denkbar und einsetzbar, wie beispielsweise Magnetostriktiva, die eine Formveränderung durch eine Änderung der umgebenden Magnetfeldstärke erfahren. Weitere Wandlerwerkstoffe, wie beispielsweise Piezoelektrika oder Elektrostriktiva, vermögen Formveränderungen zu vollziehen, die durch Applikation einer elektrischen Spannung oder eines elektrostatischen Feldes initiierbar sind.

Anhand des in Fig. 1 dargestellten Ausführungsbeispiels kann aufgrund des autark wirkenden Schaltprinzips die Kompaktheit und insbesondere die mechanische Abgeschlossenheit des eine Bremswirkung hervorrufenden sowie auch eine Bremswirkung lösenden Systems ersehen werden. Im Falle der Ausbildung der ersten Komponente in Form eines Trommelgehäuses, das wenigstens über eine einseitig offen ausgebildete Trommelgehäuseseite verfügt, über die die mit der zweiten Komponente verbundenen Wirkflächenelemente 4, 5 eingebracht werden können, wodurch ein in sich abgeschlossenes, gekapseltes Brems- bzw. Kupplungselement gebildet werden kann, das zwischen einem An- und Abtriebsstrang implementierbar ist, können, sofern der An- und Abtrieb als Drehachsen ausgebildet sind, in Abhängigkeit eines extern vorherrschenden Energiefeldes rotatorisch wirkende Kräfte oder Kraftmomente zwischen beiden Komponenten übertragen werden.

Gleichfalls ist es möglich, Linearkräfte zwischen beiden Komponenten zu übertragen, sofern die erste Komponente relativ zur zweiten Komponente längs der in Fig.1 als Drehachse D bezeichnete Linearachse längs verschieblich gelagert ist. Dies wäre beispielsweise der Fall, wenn die erste Komponente 1 als längliches Hohlzylinderrohr ausgebildet ist, längs dem die zweite Komponente 2 im Inneren längsverschieblich gelagert wäre. Im Falle einer Verkürzung des Wandlerwerkstoffes 10 geraten die Reibbeläge 6 der Wirkflächenelemente 4, 5 in Reibschluss mit der Innenwand 1' der ersten Komponente 1, wodurch eine lineare Kraftübertragung zwischen beiden Komponenten erfolgen kann. Selbstverständlich ist es denkbar, im Falle einer bloßen linearen Kraftübertragung zwischen beiden Komponenten eine von der kreisrunden Querschnittsform abweichende, beispielsweise rechteckförmig oder n-eckig ausgebildete Innenkontur der Innenwand 1' der ersten Komponente zu wählen, gegenüber der entsprechend gegenkonturiert ausgebildete Wirkflächenelemente 4, 5, die an der zweiten Komponente 2 drehbar oder linearbeweglich zur Herstellung einer Reibschlussverbindung zwangsgeführt angebracht sind, auslenkbar sind.

Der in Fig. 1 dargestellte Reibbelag 6 dient vornehmlich zur Erhöhung der zwischen dem Reibbelag 6 und der Innenwand 1' der ersten Komponente generierbaren Reibkräfte, zur Herstellung einer Reibschlussverbindung. In vorteilhafter Weise kann sowohl die Innenwand 1' der ersten Komponente 1 als auch der mit dieser in Wirkverbindung tretenden Wirkfläche seitens des Wirkflächenelementes 4, 5 strukturiert bzw. gegenstrukturiert zur Innenwand 1' ausgebildet werden, um neben einem Reibschluss auch einen Formschluss herzustellen.

Basierend auf dem gleichen Wirkprinzip der in Fig. 1 dargestellten Kupplung bzw. Bremsvorrichtung zwischen einer An- und Abtriebswelle sind in den Fig. 2 bis 4 gleich wirkende Mechanismen dargestellt, die sich jeweils in ihrer Antriebskinematik unterscheiden. In Fig. 2 sind gleichsam zur Fig. 1 die Wirkflächenelemente 4, 5 jeweils getrennt voneinander drehbar um die Drehachsen D1 und D2 an der zweiten Komponente 2 zwangsgeführt angelenkt. Auch in diesem Fall sorgt eine konventionelle Zugfeder 7, die jeweils an den, den Drehachsen D1 und D2 gegenüberliegend vorgesehenen Enden der Wirkflächenelemente 4, 5 angebracht ist, für eine ausschließlich zwischen den Wirkflächenelementen 4, 5 radial nach innen gerichtete Rückstellkraft. Zur Spreizung der Wirkflächenelemente 4, 5 radial nach außen, gegen die Innenwand 1' der ersten Komponente 1 ist zusätzlich an den Anlenkungspunkten der Zugfeder 7 ein Kniehebelmechanismus 11 angebracht, der zwei über jeweils ein Drehgelenk 12 gegeneinander schwenkbare Hebel 13, 14 vorsieht. Am Drehgelenk 12 ist ferner eine kreisförmig ausgebildete Umlenkkulisse 15 vorgesehen, über die ein draht- oder bandförmig ausgebildeter, vorzugsweise aus SMA-Werkstoff bestehender Wandlerwerkstoff 10 geführt ist, der beidseitig mit den Anlenkungspunkten jeweils der Wirkflächenelemente 4, 5 fest verbunden ist. Aus dem konstruktiven Aufbau des Kniehebelmechanismus 11 in Verbindung mit dem drahtförmig ausgebildeten Wandlerwerkstoff 10 gemäß Ausführungsbeispiel in Fig. 2 kann ersehen werden, dass bei Erwärmung des SMA-Drahtes 10 eine diesbezügliche Verkürzung zu einer Spreizung des Kniehebels 11 führt, wodurch die Wirkflächenelemente 4, 5 radial nach außen gegen die Innenwand 1' der ersten Komponente 1 gepresst werden. Die Umlenkkulisse 15 ermöglicht die Verwendung eines möglichst langen SMA-Drahtes, wodurch eine Erhöhung der prozentual zur Länge des Wandlerwerkstoffes gemessene Längenänderung und somit letztlich eine Erhöhung der zwischen den Wirkflächenelementen 4, 5 wirkenden, radial nach außen gerichteten Kraft erreicht werden kann.

In Fig. 3 sind die gleichfalls zu den vorstehenden Ausführungsbeispielen mit der zweiten Komponente 2 verbundenen Wirkflächenelemente 4, 5 jeweils drehbar an den jeweiligen Drehachsen D1 und D2 rotatorisch zwangsgeführt angelenkt. Die gegenüberliegenden Enden der Wirkflächenelemente 4, 5 weisen jeweils durch eine Lücke voneinander beabstandete Stirnseiten 16, 17 auf, die mit einem ovalförmig ausgebildeten Nocken 18, der drehbar um eine Drehachse D3, die innerhalb des Zwischenraumes zwischen den Stirnseiten 16, 17 liegt, in gleitender Wirkverbindung treten. Der Nocken 18 ist mit einem Hebelarm 18' verbunden, an dem einseitig ein mit der zweiten Komponente 2 als Gegenlager verbundener draht- oder bandförmiger Wandlerwerkstoff 10 angelenkt ist. Andererseits ist der Hebel 18' mit einem mit der zweiten Komponente 2 verbundenes Spannelement 7, in Form einer konventionellen Zugfeder, verbunden, deren Federkraft so eingestellt ist, dass der Nocken 18 in einer Ausgangsstellung beide Stirnseiten 16, 17 symmetrisch zur Drehachse D3 beabstandet. Handelt es sich bei dem Wandlerwerkstoff 10 um ein SMA-Element, so verkürzt sich das SMA-Element bei Temperaturerhöhung, wodurch eine entgegen der Federwirkung gerichtete, durch das SMA-Element generierte Kraft den Hebelarm 18' auslenkt. Hierdurch drängt der Nocken 18 gemäß seiner Außenkontur beide Stirnseiten 16, 17 in entgegen gesetzte Richtungen, wodurch die Wirkflächenelemente 4, 5 durch Drehung um die Drehachsen D1 und D2 radial nach außen gelenkt werden und mit der Innenwand 1' der ersten Komponente, wie vorstehend beschrieben, eine Reibschlussverbindung eingehen. Sinkt die Temperatur ab, so kann der draht- oder bandförmig ausgebildete Wandlerwerkstoff 10 unter Einfluss einer mechanischen Spannkraft, z.B. Federkraft, wieder in die ursprüngliche Form überführt werden und nimmt die in Fig. 3 dargestellte Neutralstellung ein.

In Fig. 4 ist eine weitere Variante zur Herstellung einer Reib- oder Formschlussverbindung zwischen einer mit einer Antriebswelle 3 verbundenen zweiten Komponente 2 mit der Innenwand 1' einer ersten Komponente 1 gezeigt. Die zweite Komponente 2 weist gleichfalls wie in den vorstehend beschriebenen Ausführungsbeispielen eine drehfest mit der Antriebswelle 3 verbundene Trägerplatte 19 auf, an der jeweils über einen Drehpunkt 20 drehbar angelenkte, hebelartig ausgebildete Wirkflächenelemente 4' vorgesehen sind, die ihrerseits der Innenwand 1' der ersten Komponente 1 zugewandte Reibbeläge 6 vorsehen. Zur radialen Auslenkung der Reibbeläge 6 in Richtung der Innenwand 1' der ersten Komponente 1 sind jeweils die hebelartig ausgebildeten Wirkflächenelemente 4' in etwa mittig mit einem Stellhebel 21 verbunden, der andererseits mit einer zweiten Trägerscheibe 22 drehbar verbunden ist, die ihrerseits durch ein Lager 23 von der durch die Welle 3 vorgegebenen Rotation und damit von der Trägerscheibe 19 entkoppelt ist. Die Trägerscheibe 22 ist an zwei an ihrer Scheibenperipherie diametral gegenüberliegenden Anlenkungspunkten einerseits mit einer konventionellen Zugfeder 7 und andererseits mit einem draht- oder bandförmig ausgebildeten Wandlerwerkstoff 10 verbunden. Die Zugfeder sowie auch der Wandierwerkstoff 10 sind als Gegenlager an der Trägerscheibe 19 einseitig angelenkt. Durch das Lager 23 ist es möglich, die Trägerscheibe 22 relativ zur Trägerscheine 19 zu verdrehen. Im entkoppelten Fall zwischen der ersten und zweiten Komponente sind die durch den Wandlerwerkstoff 10 und die Zugfeder 7 an der Trägerplatte 22 angreifenden Kräfte derart balanciert eingestellt, so dass die Reibbeläge 6 von der Innenwand 1' der ersten Komponente 1 beabstandet sind. Wird hingegen eine bestimmte Grenztemperatur überschritten, so verkürzt sich der Wandlerwerkstoff 10, wodurch die Trägerscheibe 22 relativ zur Trägerscheibe 19 im dargestellten Ausführungsbeispiel in Fig. 4 entgegen des Uhrzeigersinnes verdreht wird. Diese Verdrehung führt zur Auslenkung des mit der Trägerscheibe 22 angelenkten Auslenkhebels 21, der letztlich das hebelstangenförmig ausgebildete Wirkflächenelement 4' mit dem daran angebrachten Reibbelag 6 gegen die Innenwand 1' der ersten Komponente 1 presst. Bei entsprechendem Unterschreiten der Umgebungstemperatur ist es möglich den Wandlerwerkstoff 10 unter Einfluss einer durch die Zugfeder 7 erzeugbaren Spannkraft zu längen, so dass eine entsprechende Rückdrehung der Trägerplatte 22 in die in Fig. 4 angegebene Ausgangsstellung erfolgen kann. Wie dem dargestellten Ausführungsbeispiel zu entnehmen ist, sind jeweils drei derartiger hebelartig auslenkbarer Wirkflächenelemente vorgesehen. Die Anzahl kann variieren und richtet sich nach Form und Größe der Scheiben- und Hebelanordnung.

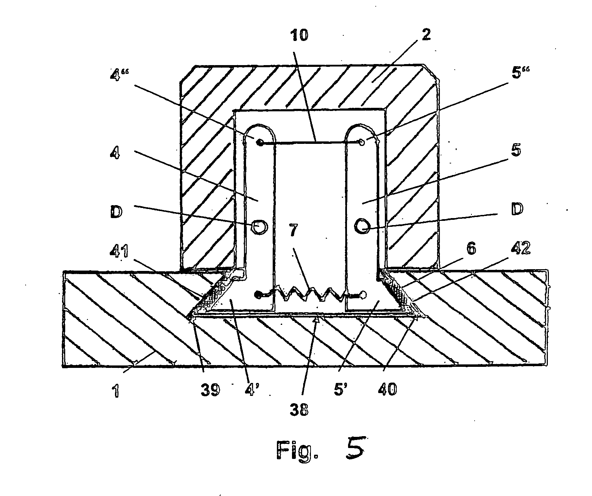

Die bisher beschriebenen Ausführungsbeispiele dienen vornehmlich zur Übertragung von Kräften oder Kraftmomenten zwischen zwei drehbar zueinander gelagerten Komponenten. Das Ausführungsbeispiel gemäß Fig. 5 dient hingegen der Übertragung von Kräften oder Kraftmomenten zwischen zwei linear zueinander beweglich gelagerten Komponenten. Hierzu sieht die erste Komponente 1, die beispielsweise als Abtrieb dient und vorzugsweise mit einem stillstehenden Teil verbunden ist, eine oberflächige, nutförmige Ausnehmung 38,vor, die im Ausführungsbeispiel gemäß Fig. 5 einen schwalbenschwanzförmigen Querschnitt mit jeweils zwei schräg zueinander orientierten, sich gegenüberliegenden Seitenflanken 39, 40 aufweist. Nicht notwendigerweise muss die Ausnehmung schwalbenschwanzförmig ausgebildet sein, so sollte wenigstens eine, die Ausnehmung 38 begrenzende Seitenflanke in Art einer Hinterschneidung ausgebildet sein, um, wie nachstehend beschrieben, eine entsprechende Klemmkraft zur zweiten Komponente 2 zu erzeugen.

Relativ zur ersten Komponente 1 linear beweglich angeordnet ist eine zweite Komponente 2 vorgesehen, die beispielsweise mit einem nicht weiter dargestellten Antrieb verbunden ist. Die zweite Komponente 2 ist hülsenartig ausgebildet und weist im Inneren zwei jeweils um eine Drehachse D schwenkbar angelenkte, hebelartig ausgebildete Wirkflächenelemente 4, 5 auf, die jeweils ein, die zweite Komponente 2 überragendes Wirkflächenelementende 4' und 5' vorsehen. Die die zweite Komponente 2 überragenden Wirkflächenelementenden 4' und 5' greifen in die Ausnehmung 38 ein und weisen den Wirkflächen 39, 40 gegenüberliegend angeordnete Wirkflächen 41, 42 auf, an denen jeweils ein Reibbelag 6 angebracht ist. Ebenfalls mit den Wirkflächenelementenden 4' und 5' verbunden ist eine konventionelle Zugfeder 7, die beide Wirkflächenelementenden 4' und 5' relativ zu den Drehachsen D zusammen zu ziehen vermag, wodurch die Wirkflächen 41, 42 mit den an ihr befindlichen Reibbelägen 6 von den ihnen gegenüberliegenden Seitenflanken 39, 40 beabstandet werden. An den den Wirkflächenelementenden 4' und 5' gegenüberliegend vorgesehenen Wirkflächenelementenden 4" und 5" ist ein aus SMA-Werkstoff gefertigter Wandlerwerkstoff 10 gespannt, der sich bei Temperaturerhöhung zusammenzuziehen vermag. Aufgrund der Hebelwirkung sowie Drehbarkeit der einzelnen Wirkflächenelemente 4, 5 um die entsprechenden Drehachsen D werden in diesem Fall die Wirkflächen 41, 42 mit den daran befestigten Reibbelägen 6 kraftbeaufschlagt gegen die Seitenflanken 39 und 40 gepresst, so dass die erste und zweite Komponente gegeneinander arretiert werden können.

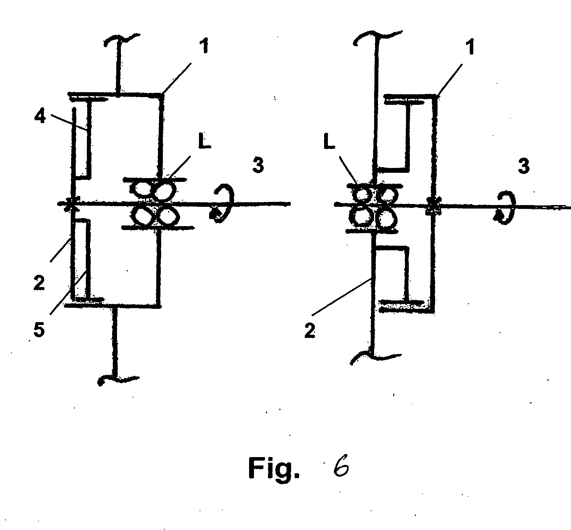

Die vorstehend beschriebenen Ausführungsbeispiele weisen jeweils eine erste und zweite Komponente auf, die jeweils entweder mit einem An- oder Abtrieb verbindbar sind. Aus den in Fig. 6a und b dargestellten Grafiken kann entnommen werden, dass die lösungsgemäße Vorrichtung flexibel einsetzbar ist. So geht aus Fig. 6a hervor, dass die zumeist als Trommelgehäuse ausgebildete erste Komponente 1 mit einem Abtrieb verbunden ist und drehbar relativ zu einer Antriebswelle 3 über ein entsprechendes Lager L geführt ist. Die zweite Komponente 2 ist als Trägerplatte ausgebildet und drehfest mit dem Wellenantrieb 3 verbunden. An die zweite Komponente angelenkt sind Wirkflächenelemente 4, 5, die radial zur Welle 3 gegen die Innenwand der trommelförmig ausgebildeten ersten Komponente auslenkbar sind und somit radial wirkende Kräfte bzw. Kraftmomente auf die erste Komponente übertragen.

Ebenso ist es möglich, die erste Komponente 1 gemäß Bilddarstellung in Fig. 6b mit dem Wellenantrieb 3 drehfest zu verbinden und die zweite Komponente 2 über ein Lager L von der Drehbewegung des Wellenantriebes 3 zu entkoppeln. Die zweite Komponente 2 ist in diesem Fall mit dem Abtrieb verbunden.

Durch die lösungsgemäße Vorrichtung, die je nach Einsatzzweck als Kupplung oder Bremse ausgeführt werden kann, erfordert zur Betätigung bzw. Schalten im Falle der Verwendung eines SMA-Wandlerwerkstoffes außer einer Wärmezuführung, die durch einen Prozess verursacht werden kann, beispielsweise durch Abwärme eines zu kühlenden Motors, keine weitere geregelte oder gesteuerte Energiezufuhr, beispielsweise in Form von mechanischer, elektrischer, hydraulischer oder pneumatischer Energie. Es ist somit möglich, insbesondere temperaturabhängige Schaltvorgänge an linear bewegten oder rotierenden Teilen in einfacher, kompakter, verschleiß- und wartungsarmer Weise durchzuführen, wobei bis auf die Wärme, die den Schaltvorgang auslöst, keine weitere Energie zugeführt werden muss. Der Schaltvorgang ist reversibel, d.h. er wird ohne äußere Energiezufuhr wieder rückgängig gemacht, sobald die Temperatur unter einen bestimmten Wert fällt.

### Bezugszeichenliste

- 1: Erste Komponente
- 1': Innenwand
- 2: Zweite Komponente
- 3: Welle, Wellenantrieb
- 4, 5: Wirkflächenelement
- 4', 5', 4", 5": Wirkflächenelementende
- 6: Reibbelag
- 7: Spannelement in Form von Zug- oder Druckfeder
- 8, 9: Stegartiger Fortsatz
- 10: Wandlerwerkstoff
- 11: Kniehebel
- 12: Drehgelenk
- 13, 14: Hebel
- 15: Führungskulisse
- 16, 17: Stirnseite
- 18: Nocken
- 18': Hebelarm
- 19: Erste Trägerscheibe
- 20: Drehpunkt
- 21: Verbindungshebel
- 22: Zweite Trägerscheibe
- 23: Lager
- 24, 24': N.N.
- 25: N.N.
- 26: N.N.
- 27: N.N.
- 28: N.N.
- 29: N.N.
- 30: N.N.
- 31: N.N.
- 32: N.N.
- 33: N.N.
- 34: N.N.
- 35: N.N.
- 36: N.N.
- 37: N.N
- 38: Ausnehmung
- 39, 40: Seitenflanke
- 41, 42: Wirkfläche
- D, D1, D2, D3: Drehachse
- L: Lager

## Patentansprüche

1. Vorrichtung zur Herstellung einer Reib- und/oder Formschlussverbindung zwischen zwei relativ zueinander rotierbar oder linearbeweglich angeordneten Komponenten (1,2) zu Zwecken einer Übertragung von linear und/oder rotatorisch zwischen beiden Komponenten wirkenden Kräften und/oder Kraftmomenten, von denen die erste Komponente die zweite Komponente zumindest abschnittsweise mit wenigstens einer der zweiten Komponente zugewandten Innenwand (1') umgibt und die zweite Komponente wenigstens zwei länglich, vorzugsweise bogenförmig, ausgebildete Wirkflächenelemente (4,5) vorsieht, die um eine gemeinsame Drehachse oder um jeweils getrennte, parallel zueinander orientierte Drehachsen im Bereich ihres einen Wirkflächenelementendes schwenkbar gelagert sind und kraftbeaufschlagt aus einer ersten Position, in der die Wirkflächenelemente von der Innenwand (1') beabstandet sind, in eine zweite Position überführbar sind, in der die Wirkflächenelemente (4,5) mit der Innenwand (1') die Reib- und/oder Formschlussverbindung eingeht, wobei wenigstens ein mechanisches Spannelement vorgesehen ist, das jeweils mit dem anderen Wirkflächenelementende der Wirkflächenelemente (4,5) verbunden ist und eine ausschließlich zwischen den Wirkflächenelementen wirkende Rückstellkraft entfaltet, die die Wirkflächenelemente (4,5) in der ersten Position hält, und wobei eine entgegen der Rückstellkraft auf die Wirkflächenelemente einwirkende, ausschließlich durch einen Wandlerwerkstoff (10) angetriebene Kinematik vorgesehen ist, die im Bereich der jeweils anderen Wirkflächenelementenden mit beiden Wirkflächenelementen (4,5) verbunden ist und die Wirkflächenelement in die zweite Position überführt,
**dadurch gekennzeichnet, dass** die Kinematik als Kniehebel (11) ausgebildet ist, der jeweils mit den anderen Wirkflächenelementenden verbunden ist und über den ein draht- oder bandförmiger Wandlerwerkstoff (10) geführt ist, der mit den beiden anderen Wirkflächenelementenden verbunden ist und der bei Energieeintrag, vorzugsweise bei kontaktlosem Energieeintrag, eine Formänderung erfährt, wodurch der Kniehebel in eine gespreizte Stellung und die Wirkflächenelemente (4,5) in die zweite Position überführbar sind.

2. Vorrichtung nach dem Oberbegriff des Anspruches 1,
**dadurch gekennzeichnet, dass** im Bereich der jeweils anderen Wirkflächenelementenden jeweils ein stegartiger Fortsatz (8,9) angebracht ist, der sich jeweils in Richtung des andern Wirkflächenelementes erstreckt, wobei sich beide Fortsätze (8,9) vorzugsweise gegenseitig überlappen, und
dass zwischen beiden Fortsätzen ein draht- oder bandförmiger Wandlerwerkstoff (10) gespannt ist, der bei Energieeintrag, vorzugsweise bei kontaktlosem Energieeintrag, eine Formänderung erfährt, wodurch die Fortsätze und die damit verbundenen Wirkftächenetemente (4,5) in entgegen gesetzte Raumrichtungen auslenkbar und die Wirkflächenelemente (4,5) in die zweite Position überführbar sind.

3. Vorrichtung nach dem Oberbegriff des Anspruches 1,
**dadurch gekennzeichnet, dass** die jeweils anderen Wirkflächenelementenden durch einen Spalt voneinander beabstandet sind,
dass innerhalb des Spaltes eine von der Kreisform abweichende, um eine Drehachse drehbar gelagerte Auslenkkontur vorgesehen ist, an der beide Wirkflächenelementenden gegenüberliegend anliegen,
dass an der Auslenkkontur ein Hebetarm (18') angebracht ist, an dem einseitig ein mit der zweiten Komponente als Gegenlager verbundener draht- oder bandförmiger Wandlerwerkstoff (10) angelenkt ist und an dem andererseits das mit der zweiten Komponente als Gegenlager verbundene Spannelement (7) angelenkt ist, und dass bei Energieeintrag, vorzugsweise bei kontaktlosem Energieeintrag, der draht- oder bandförmige Wandlerwerkstoff eine Formänderung erfährt, wodurch die Auslenkkontur gedreht und der Abstand zwischen beiden Wirkflächenelementenden vergrößert wird, so dass die Wirkflächenelemen (4,5) in die zweite Position überführbar sind.

4. Vorrichtung nach dem Oberbegriff des Anspruches 1,
**dadurch gekennzeichnet, dass** die erste Komponente eine schwalbenwanzartige Ausnehmung (38) mit jeweils zwei schräg zueinander orientierten, sich gegenüberliegenden Seitenflanken aufweist, die der Innenwand der ersten Komponente entsprechen, und
dass die zweite Komponente zwei translatorisch oder rotatorisch zwangsgeführte Wirkflächenelemente vorsieht, die in die Ausnehmung eingreifen und vermittels der den Wandlerwerkstoff (10) aufweisenden Kinematik derart antreibbar sind, dass bei einer durch Energieeintrag, vorzugsweise durch kontaktlosem Energieeintrag, hervorgerufenen Formänderung des Wandlerwerkstoffes die Wirkflächenelemente (4,5) jeweils in Eingriff mit einer Seitenflanke gelangen.

5. Vorrichtung nach Anspruch 4,
**dadurch gekennzeichnet, dass** die Wirkflächenelemente (4,5) jeweils als Schwenkhebel ausgebildet und jeweils um eine mittig den Schwenkhebel durchlaufende Drehachse (D) schwenkbar gelagert sind, und
dass jeder Schwenkhebel zwei Schwenkhebelenden (4',5') vorsieht, von denen jeweils der erste mit einem draht- oder bandförmigen Wandlerwelrkstoff verbunden ist und das jeweils zweite Schwenkhebelende einen an die jeweils schräg verlaufende Seitenflanke angepasste Wirkfläche aufweist.

6. Vorrichtung nach einem der Ansprüche 1 bis 3,
**dadurch gekennzeichnet, dass** die Innenwand der ersten Komponente das wenigstens eine Spannelement sowie die Kinematik peripher vollständig umgibt.

7. Vorrichtung nach einem der Ansprüche 1 bis 6,
**dadurch gekennzeichnet, dass** das wenigstens eine Wirkflächenelement an der zweiten Komponente beweglich und zwangsgeführt angelenkt ist.

8. Vorrichtung nach einem der Ansprüche 1 bis 7,
**dadurch gekennzeichnet, dass** das wenigstens eine Wirkflächenelement relativ zur zweiten Komponente linearbeweglich oder um eine Drehachse rotatorisch zwangsgeführt ist.

9. Vorrichtung nach einem der Ansprüche 1 bis 8,
**dadurch gekennzeichnet, dass** das wenigstens eine Wirkflächenelement (4,5) eine Wirkfläche aufweist, die derart gegenkonturiert zur Innenwand ausgebildet ist, dass die Wirkfläche zumindest abschnittweise mit der Innenwand des ersten Körpers in Flächenkontakt bringbar ist.

10. Vorrichtung nach Anspruch 9,
**dadurch gekennzeichnet, dass** die Wirkfläche des wenigstens einen Wirkflächenelementes eine zwischen dem Wirkflächenelement und der ersten Komponente die Reibwirkung erhöhende Oberfläche, in Art eines Reibbelages (6), aufweist.

11. Vorrichtung nach einem der Ansprüche 1 bis 3 oder 6 bis 8,
**dadurch gekennzeichnet, dass** die erste Komponente einen zumindest einseitig offenen hohlzylindrisch ausgebildeten Abschnitt aufweist mit einer Innenwand, und dass die zweite Komponente ein der offenen Seite des hohlzylindrisch ausgebildeten Abschnittes der ersten Komponente zugewandtes Trägerelement vorsieht, an dem das wenigstens eine Wirkflächenelement und das wenigstens eine Spannelement derart angebracht sind, dass zumindest das wenigstens eine Wirkflächenelement in das Innere des hohlzylindrisch ausgebildeten Abschnitts der ersten Komponente hineinragt und bei Überführung in die zweite Position mit der Innenwand der ersten Komponente in Wirkverbindung tritt.

12. Verwendung der Vorrichtung nach einem der Ansprüche 1 bis 11,
als Kupplung zwischen einem An- und einem Abtrieb oder als Bremse einer drehbaren oder linearbeweglichen Komponente.

13. Verwendung nach Anspruch 12,
**dadurch gekennzeichnet, dass** die erste Komponente Teil eines Antriebs und die zweite Komponente Teil eines Abtriebs ist oder umgekehrt.

14. Verwendung nach Anspruch 13,
**dadurch gekennzeichnet, dass** die erste Komponente relativ zur räumlich stationären zweiten Komponente drehbar oder linearbeweglich angeordnet ist oder umgekehrt.

## Claims

1. An apparatus for producing a frictional and/or form fitting connection between two components (1, 2) which are arranged such that they can be moved linearly or rotated relative to one another, for the purpose of transmitting forces and/or force moments which act in a linear and/or rotational manner between the two components, of which the first component surrounds the second component at least in sections with at least one inner wall (1') which faces the second component, and the second component provides at least two active-face elements (4, 5) which are configured in an elongated, preferably arcuate manner and which are mounted in the region of their one active-face element end to be pivotable about a common rotational axis or in each case about separate rotational axes oriented parallel to one another, and which can be transferred in a force-loaded manner from a first position, in which the active-face elements are spaced apart from the inner wall (1'), into a second position in which the active-face elements (4, 5) enter into a frictional and/or form-fitting connection with the inner wall (1'), wherein at least one mechanical tensioning element is provided which in each case is connected with the other active-face element end of the active-face elements (4, 5) and which deploys a restoring force acting exclusively between the active-face elements, which restoring force holds the active-face elements (4, 5) in the first position, and wherein a kinematic system is provided which acts against the restoring force on the active-face elements and is driven exclusively by a converter material (10) and which is connected in the region of each of the other active-face element ends with the two active-face elements (4, 5) and transfers the active-face elements into the second position,
**characterized in that** the kinematic system is configured as toggle lever (11) that is connected in each case with the other active-face element ends and over which a wire-shaped or strip-shaped converter material (10) extends, wherein the converter material is connected with the two other active-face element ends and is subjected to a change of shape upon energy input, preferably contactless energy input, whereby the toggle lever can be transferred into a spread position and the active-face elements (4, 5) can be transferred into the second position.

2. The apparatus according to the preamble of claim 1,
**characterized in that** in the region of each of the other active-face element ends in each case one web-like extension (8, 9) is attached which extends in each case in the direction of the other active-face element, wherein both extensions (8, 9) preferably overlap each other, and
that between the two extensions, a wire-shaped or strip-shaped converter material (10) extends which is subjected to a change of shape upon energy input, preferably contactless energy input, whereby the extensions and the active-face elements (4, 5) connected thereto can be deflected in opposite space directions and the active-face elements (4, 5) can be transferred into the second position.

3. The apparatus according to the preamble of claim 1,
**characterized in that** each of the other active-face element ends are spaced apart from each other by a gap,
that within the gap, a deflection contour is provided which has a shape different than a circular shape and which is mounted to be rotatable about a rotational axis, on which deflection contour, the two active-face element ends abut on opposite sides,
that on the deflection contour, a lever arm (18') is attached on which on one side, a wire-shaped or strip-shaped converter material (10) connected with the second component as end support is coupled, and on which on the other side, the tension element (7) connected with the second component as end support is coupled, and that upon energy input, preferably contactless energy input, the wire-shaped or strip-shaped converter material is subjected to a change of shape, whereby the deflection contour is turned and the distance between the two active-face element ends is increased in such a manner that the active-face elements (4, 5) can be transferred into the second position.

4. The apparatus according to the preamble of claim 1,
**characterized in that** the first component has a dovetail-shaped recess (38) with two opposing lateral flanks which each are oriented obliquely to one another and correspond to the inner wall of the first component, and
that the second component provides two active-face elements which are forcibly guided in a translatory or rotatory manner, which engage with the recess and can be driven by means of the kinematic system comprising the converter material (10) in such a manner that upon a change of shape of the converter material caused by energy input, preferably contactless energy input, each of the active-face elements (4, 5) engage with one lateral flank.

5. The apparatus according to claim 4,
**characterized in that** each of the active-face elements (4, 5) is configured as pivoted lever and each of them is mounted to be pivotable about a rotational axis (D) running centrally through the pivoted lever, and
that each pivoted lever provides two pivoted lever ends (4',5'), each first of which is connected to the wire-shaped and strip-shaped converter material, and each of the second pivoted lever ends has an active face which is adapted in each case to the obliquely extending lateral flank.

6. The apparatus according to any one of the claims 1 to 3,
**characterized in that** the inner wall of the first component completely surrounds the periphery of the at least one tension element and the kinematic system.

7. The apparatus according to any one of the claims 1 to 6,
**characterized in that** the at least one active-face element is coupled to the second component in a movable and forcibly guided manner.

8. The apparatus according to any one of the claims 1 to 7,
**characterized in that** the at least one active-face element is linearly movable relative to the second component or is rotatable about a rotational axis in a forcibly guided manner.

9. The apparatus according to any one of the claims 1 to 8,
**characterized in that** the at least one active-face element (4, 5) has an active face which is matchingly contoured relative to the inner wall in such a manner that the active face can be brought in surface contact at least in sections with the inner wall of the first body.

10. The apparatus according to claim 9,
**characterized in that** the active face of the at least one active-face element comprises a surface which increases the friction between the active-face element and the first component in the manner of a friction lining (6).

11. The apparatus according to any one of claims 1 to 3 or 6 to 8,
**characterized in that** the first component has a hollow-cylindrical section that is open on at least one side and has an inner wall, and that the second component provides a carrier element facing the open side of the hollow-cylindrical section of the first component and on which carrier element the at least one active-face element and the at least one tension element is attached in such a manner that at least the at least one active-face element projects into the interior of the hollow-cylindrical section of the first component and is functionally connected with the inner wall of the first component when transferred into the second position.

12. A use of the device according to any one of the claims 1 to 11,
as clutch between a drive unit and a driven unit or as break of a rotatable or linearly moveable component.

13. The use according to claim 12,
**characterized in that** the first component is part of a drive unit and the second component is part of a driven unit, or vice versa.

14. The use according to claim 13,
**characterized in that** the first component is arranged rotatably or linearly movable relative to the first component which is spatially stationary, or vice versa.

## Revendications

1. Dispositif pour établir une liaison par friction et/ou une liaison par complémentarité de formes entre deux composants (1, 2) pouvant tourner l'un par rapport à l'autre ou disposés avec une mobilité rectiligne dans le but d'une transmission de forces et/ou de couples de force agissant de façon linéaire et/ou par rotation entre les deux composants, dont le premier composant entoure le second composant au moins par portions avec au moins une paroi intérieure (1') tournée vers le second composant et le second composant prévoit au moins deux éléments de surface active (4, 5) conçus de façon oblongue, de préférence en forme d'arc, qui sont montés de façon à pouvoir basculer autour d'un axe de rotation commun ou autour d'axes de rotation respectivement séparés, orientés parallèlement entre eux, dans la zone de l'une des extrémités d'élément de surface active et peuvent être transférés sous l'effet de la force d'une première position, dans laquelle les éléments de surface active sont espacés de la paroi intérieure (1'), dans une seconde position, dans laquelle les éléments de surface active (4, 5) suivent la liaison par friction et/ou par complémentarité de formes avec la paroi intérieure (1'), sachant qu'au moins un élément de serrage mécanique est prévu, lequel est relié respectivement à l'autre extrémité d'élément de surface active des éléments de surface active (4, 5) et déploie une force de rappel agissant exclusivement entre les éléments de surface active, laquelle maintient les éléments de surface active (4, 5) dans la première position, et sachant qu'il est prévu une cinématique agissant dans le sens contraire à la force de rappel sur les éléments de surface active, entraînée exclusivement par un matériau convertisseur (10), laquelle est reliée dans la zone des autres extrémités respectives d'élément de surface active avec les deux éléments de surface active (4, 5) et transfère les éléments de surface active dans la seconde position,
**caractérisé en ce que** la cinématique est conçue sous forme de levier à genouillère (11), qui est relié respectivement aux autres extrémités d'élément de surface active et par lequel un matériau convertisseur (10) sous forme de fil ou de bande est guidé, lequel est relié aux deux autres extrémités d'élément de surface active et qui, en cas d'apport d'énergie, de préférence en cas d'apport d'énergie sans contact, subit une variation de forme, de sorte que le levier à genouillère peut être transféré dans une position écartée et les éléments de surface active (4, 5) dans la seconde position.

2. Dispositif selon le préambule de la revendication 1,
**caractérisé en ce qu'**à chaque fois un appendice (8, 9) de type barrette, qui s'étend respectivement en direction de l'autre élément de surface active, est placé dans la zone des autres extrémités respectives d'élément de surface active, les deux appendices (8, 9) se chevauchant de préférence réciproquement et
**en ce qu'**un matériau convertisseur (10) en forme de fil ou de bande est serré entre les deux appendices, lequel matériau subit une modification de forme en cas d'apport d'énergie, de préférence en cas d'apport d'énergie sans contact, de sorte que les appendices et les éléments de surface active (4, 5) reliés ainsi peuvent être déviés dans des directions d'espace opposées et les éléments de surface active (4, 5) peuvent être transférés dans la seconde position.

3. Dispositif selon le préambule de la revendication 1,
**caractérisé en ce que** les autres extrémités respectives d'élément de surface active sont espacées les unes des autres par une fente,
**en ce qu'**un contour de déviation, s'écartant de la forme circulaire et monté de façon à pouvoir tourner autour de l'axe de rotation, est prévu à l'intérieur de la fente, contour sur lequel les deux extrémités d'élément de surface active s'appliquent de façon opposée,
**en ce qu'**un bras de levier (18') est placé sur le contour extérieur, levier sur lequel sur un côté est articulé un matériau convertisseur (10) en forme de fil ou de bande, relié au second composant comme contre-palier et sur lequel d'autre part est articulé l'élément de serrage (7) relié au second composant comme contre-palier, et **en ce que**, en cas d'apport d'énergie, de préférence en cas d'apport d'énergie sans contact, le matériau convertisseur en forme de fil ou de bande subit une modification de forme, de sorte que le contour extérieur est tourné et la distance entre les deux extrémités d'élément de surface active est augmentée, de sorte que les éléments de surface active (4, 5) peuvent être transférés dans la seconde position.

4. Dispositif selon le préambule de la revendication 1,
**caractérisé en ce que** le premier composant présente un évidement (38) en forme de queue d'aronde, avec respectivement deux flancs latéraux orientés en biais l'un par rapport à l'autre et se faisant face, qui correspondent à la paroi intérieure du premier composant, et
**en ce que** le second composant prévoit deux éléments de surface active guidés de force par translation ou rotation, qui s'engagent dans l'évidement et peuvent être entraînés au moyen de la cinématique présentant le matériau convertisseur (10) de telle sorte que, dans le cas d'une variation de forme du matériau convertisseur, provoquée par apport d'énergie, de préférence par apport d'énergie sans contact, les éléments de surface active (4, 5) parviennent à chaque fois en prise avec un flanc latéral.

5. Dispositif selon la revendication 4,
**caractérisé en ce que** les éléments de surface active (4, 5) sont conçus respectivement comme leviers basculants et sont fixés de façon à pouvoir pivoter à chaque fois autour d'un axe de rotation (D) traversant au centre le levier basculant, et
**en ce que** chaque levier basculant prévoit deux extrémités de levier basculant (4', 5'), dont respectivement la première est reliée à un matériau convertisseur sous forme de fil ou de bande et **en ce que** à chaque fois la seconde extrémité du levier basculant présente une surface active adaptée au flanc latéral agencé à chaque fois en biais.

6. Dispositif selon l'une quelconque des revendications 1 à 3,
**caractérisé en ce que** la paroi intérieure du premier composant entoure complètement au plan périphérique le au moins un élément de serrage et la cinématique.

7. Dispositif selon l'une quelconque des revendications 1 à 6,
**caractérisé en ce que** le au moins un élément de surface active est articulé de façon mobile et guidé de force sur le second composant.

8. Dispositif selon l'une quelconque des revendications 1 à 7,
**caractérisé en ce que** le au moins un élément de surface active est guidé de force avec une mobilité rectiligne par rapport au second composant ou par rotation autour d'un axe de rotation.

9. Dispositif selon l'une quelconque des revendications 1 à 8,
**caractérisé en ce que** le au moins un élément de surface active (4, 5) présente une surface active qui est conçue avec un contre-contour par rapport à la paroi intérieure de telle sorte que la surface active peut être amenée en contact de surface au moins par endroits avec la paroi intérieure du premier corps.

10. Dispositif selon la revendication 9,
**caractérisé en ce que** la surface active du au moins un élément de surface active présente une surface augmentant l'effet de frottement entre l'élément de surface active et le premier composant, à la façon d'une garniture de frottement (6).

11. Dispositif selon l'une quelconque des revendications 1 à 3 ou 6 à 8,
**caractérisé en ce que** le premier composant présente une portion ouverte au moins sur un côté et conçue en forme de cylindre creux avec une paroi intérieure, et **en ce que** le second composant prévoit un élément support tourné vers le côté ouvert du tronçon, conçu en forme de cylindre creux, du premier composant, élément sur lequel le au moins un élément de surface active et le au moins un élément de serrage sont placés de telle sorte qu'au moins le au moins un élément de surface active dépasse à l'intérieur du tronçon conçu en forme de cylindre creux du premier composant et entre en liaison active avec la paroi intérieure du premier composant en cas de transfert dans la seconde position.

12. Utilisation du dispositif selon l'une quelconque des revendications 1 à 11,
sous forme d'accouplement entre un entraînement et une sortie ou sous forme de frein d'un composant rotatif ou mobile de façon rectiligne.

13. Utilisation selon la revendication 12,
**caractérisée en ce que** le premier composant fait partie d'un entraînement et le second composant fait partie d'une sortie ou inversement.

14. Utilisation selon la revendication 13,
**caractérisé en ce que** le premier composant est disposé de façon rotative ou mobile linéairement par rapport au second composant fixe dans l'espace ou inversement.
